# EUROPEAN PATENT APPLICATION

(11) **EP 4 559 616 A1**
(43) Date of publication of application: **28.05.2025**
(21) Application number: 24775072.2
(22) Date of filing: 13.02.2024
(51) Int. Cl.: B23K 26/16, B23K 26/362, B08B 15/02

(54) **DEVICE FOR COLLECTING FOREIGN SUBSTANCES GENERATED DURING LASER NOTCHING, AND METHOD FOR COLLECTING FOREIGN SUBSTANCES BY USING SAME**

(30) Priority: 17.03.2023 KR 20230035340
(71) Applicant: LG Energy Solution, Ltd., Seoul 07335 (KR)
(72) Inventor: PARK, Jong In, Daejeon 34122 (KR); KIM, Won Seop, Daejeon 34122 (KR); LEE, Hak Sik, Daejeon 34122 (KR); JEONG, Seon Yong, Daejeon 34122 (KR); KIM, Tae Su, Daejeon 34122 (KR); KIM, Jun Wan, Daejeon 34122 (KR); PARK, Dong Hyeuk, Daejeon 34122 (KR); LEE, Seo Jun, Daejeon 34122 (KR); KIM, Gil Woo, Daejeon 34122 (KR); LEE, Byung Hee, Daejeon 34122 (KR); SONG, Won Gyu, Daejeon 34122 (KR); LEE, Heon Seung, Daejeon 34122 (KR)
(74) Representative: Plasseraud IP
(86) International application number: PCT/KR2024/001997
(87) International publication number: WO 2024/196024

(57) **Abstract**

Disclosed are an apparatus configured for capturing debris generated during laser notching and a debris capture method using the same, and more particularly an apparatus for capturing debris generated when a laser beam is radiated to an electrode supplied to a cylindrical rotary drum so as to be brought into tight contact with an outer surface of the cylindrical rotary drum to notch an edge of the electrode, the apparatus including a debris capture unit having an open surface located so as to face a notched portion of the electrode, the debris capture unit being configured to capture debris, a debris transfer unit located under the debris capture unit, the debris transfer unit being configured to transfer the captured debris, a blowing unit located above the debris capture unit, the blowing unit being configured to blow air downward, and a scrap guide unit configured to guide scrap, generated by notching, downward and outside of the debris capture unit, and a debris capture method using the same.

## Description

### [Technical Field]

This application claims the benefit of priority to Korean Patent Application No. 2023-0035340 filed on March 17, 2023 the disclosure of which is incorporated herein by reference in its entirety.

The present invention relates to a debris capture apparatus and capture method for capturing debris generated during electrode tab formation using a laser.

### [Background Art]

With recent development of alternative energies due to air pollution and energy depletion caused as the result of use of fossil fuels, demand for secondary batteries capable of storing electrical energy that is produced has increased. Secondary batteries, which are capable of being charged and discharged, are intimately used in daily life. For example, secondary batteries are used in mobile devices, electric vehicles, and hybrid electric vehicles.

In order to satisfy demand of users with respect to secondary batteries, a plurality of battery cells is disposed in a small-sized device, whereas a battery module including a plurality of battery cells electrically connected to each other or a battery pack including a plurality of battery modules is used in a vehicle, etc.

Meanwhile, depending on the shape of a battery case, lithium secondary batteries are classified into a cylindrical secondary battery having an electrode assembly mounted in a cylindrical metal can, a prismatic secondary battery having an electrode assembly mounted in a prismatic metal can, and a pouch-shaped secondary battery having an electrode assembly mounted in a pouch-shaped case made of an aluminum laminate sheet.

The electrode assembly is formed by stacking a positive electrode and a negative electrode in the state in which a separator is interposed therebetween, and each of the positive electrode and the negative electrode is manufactured through a process of forming an electrode tab at a corresponding one of a positive electrode sheet and a negative electrode sheet and a process of cutting the electrode sheet into a unit electrode.

Particularly, in the process of forming the electrode tab, a laser is radiated to remove the remaining part of a non-coated portion of the electrode sheet excluding the electrode tab, and if debris scattered during laser notching is attached to the electrode, the electrode becomes defective. For this reason, all of the debris generated must be reliably captured and removed.

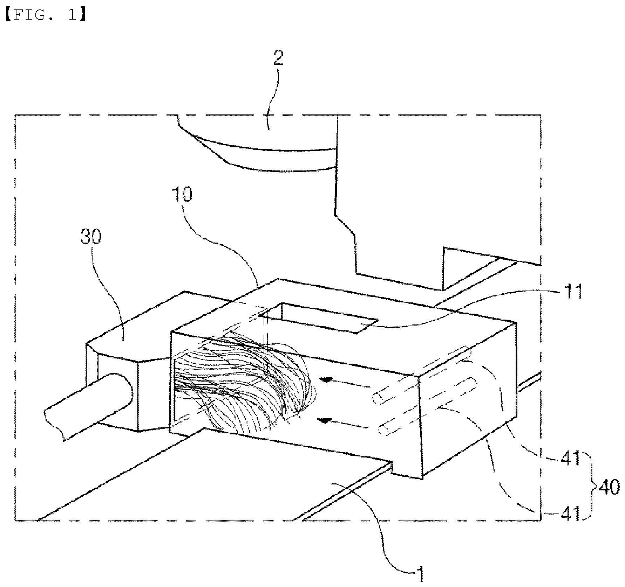

FIG. 1 is a view showing conventional removal of debris during laser notching. As shown in FIG. 1, a blowing unit 40 communicating with a suction unit 30 and including a plurality of air knives 41 is provided in a main body 10. When the blowing unit 40 blows air and debris in a direction parallel to a width direction of an electrode sheet 1 that is transferred, the blown air and debris are suctioned into the suction unit 30, which is provided at the position facing the blowing unit 40 so as to communicate with the blowing unit, whereby the debris is removed.

However, since the amount of debris introduced into the suction unit 30 is dependent on the blowing force of the blowing unit 40 located so as to face the suction unit, a small or large amount of debris may not be introduced into the suction unit 30.

### (Prior Art Document)

(Patent Document 1) Korean Patent Application Publication No. 2015-0062847 (2015.06.08)

### [Disclosure]

### [Technical Problem]

The present invention has been made in view of the above problems, and it is an object of the present invention to provide a debris capture apparatus having a structure capable of reliably capturing debris generated during electrode notching using a laser.

It is another object of the present invention to provide a debris collection method capable of reliably capturing debris generated during electrode notching using a laser.

### [Technical Solution]

In order to accomplish the above objects, an apparatus configured for capturing debris generated during laser notching according to the present invention, which is an apparatus for capturing debris generated when a laser beam is radiated to an electrode (E) supplied to a cylindrical rotary drum (RD) so as to be brought into tight contact with an outer surface of the cylindrical rotary drum to notch an edge of the electrode (E), includes a debris capture unit (100) having an open surface located so as to face a notched portion of the electrode (E), the debris capture unit being configured to capture debris, a debris transfer unit (200) located under the debris capture unit (100), the debris transfer unit being configured to transfer the captured debris, a blowing unit (300) located above the debris capture unit (100), the blowing unit being configured to blow air downward, and a scrap guide unit (400) configured to guide scrap (S), generated by notching, downward and outside of the debris capture unit (100).

Also, in the apparatus for capturing debris generated during laser notching according to the present invention, the debris capture unit (100) may include a first surface (110) and a second surface (120) vertically arranged and spaced apart from each other by a predetermined distance, a third surface (130) located along a vertically oriented side edge of each of the first surface (110) and the second surface (120), and a fourth surface (140) located along an upper edge of each of the first surface (110) and the second surface (120), wherein the third surface (130) may be provided with a second sight window (131), through which the laser beam passes, and the fourth surface (140) may be provided with a first through-hole (141) and a second incision portion (142) configured to guide the air downward.

Also, in the apparatus for capturing debris generated during laser notching according to the present invention, the fourth surface (140) may be inclined upward in a direction toward the front.

Also, in the apparatus for capturing debris generated during laser notching according to the present invention, lower parts of other vertically oriented side edges of the first surface (110) and the second surface (120) may be provided respectively with a first inclined portion (112) and a second inclined portion (122), each of which is inclined at a predetermined angle downward in a direction toward the rear, and a fifth surface (150) configured to connect the first inclined portion (112) and the second inclined portion (122) to each other may be further provided.

Also, in the apparatus for capturing debris generated during laser notching according to the present invention, the blowing unit (300) may include a first blowing unit (310) located in the first through-hole (141) and a second blowing unit (320) located in the second incision portion (142).

Also, in the apparatus for capturing debris generated during laser notching according to the present invention, the first blowing unit (310) may include a block-shaped first blowing unit body (311) having a first air inlet (311a) provided in a side surface thereof and a first air outlet (311b) provided in a lower surface thereof and a first air supply member (312) mounted in the first air inlet (311a).

Also, in the apparatus for capturing debris generated during laser notching according to the present invention, the lower surface of the first blowing unit (310) may have a depression (311c) having a depth gradually increasing in a direction toward the rear.

Also, in the apparatus for capturing debris generated during laser notching according to the present invention, the second blowing unit (320) may include a cylindrical or polygonal column-shaped second blowing unit body (321) having a second air inlet (321a) provided in a side surface thereof and a slit-shaped second air outlet (321b) provided in a lower surface thereof and a second air supply member (322) mounted in the second air inlet (321a).

Also, in the apparatus for capturing debris generated during laser notching according to the present invention, the debris transfer unit (200) may include a first transfer pipe (210) connected to the debris capture unit (100) and a second transfer pipe (220) located under the first transfer pipe (210), wherein the first transfer pipe (210) may have a conical shape with a sectional area gradually decreasing in a downward direction.

Also, in the apparatus for capturing debris generated during laser notching according to the present invention, the other vertically oriented side edge of the second surface (120) may have a first incision portion (121) incised in an arc shape.

Also, in the apparatus for capturing debris generated during laser notching according to the present invention, the distance between the first surface (110) and the second surface (120) may be gradually increased toward in a direction toward the front.

Also, in the apparatus for capturing debris generated during laser notching according to the present invention, the scrap guide unit (400) may include a fixture (410) abutting the fifth surface (150) and a guide plate (420) connected to the fixture (410), the guide plate having a predetermined curvature.

Also, in the apparatus for capturing debris generated during laser notching according to the present invention, a part of an upper part of the guide plate (420) may be located in the debris capture unit (100) and the remaining part of the upper part of the guide plate may be located outside the debris capture unit (100) while extending downward by a predetermined length.

In addition, a debris capture method according to the present invention includes a first step of locating the debris capture apparatus at a position spaced apart from a cylindrical rotary drum (RD) by a predetermined distance and a second step of radiating the laser beam to notch an edge of an electrode (E), wherein a step of supplying air to the blowing unit (300) is performed before the second step.

### [Advantageous Effects]

As is apparent from the above description, an apparatus for capturing debris generated during laser notching according to the present invention and a debris capture method using the same have the advantage that a debris capture unit has a structure in which the other surfaces are closed except one surface facing an electrode, whereby the capture of debris generated during laser notching is advantageous.

Furthermore, in the apparatus for capturing debris generated during laser notching according to the present invention and the debris capture method using the same, a plurality of blowing units is provided, whereby the introduction of the debris into the debris capture unit and the transfer of the debris to a debris transfer unit may be effectively performed.

Furthermore, in the apparatus for capturing debris generated during laser notching according to the present invention and the debris capture method using the same, a scrap guide unit is provided, which not only facilitates recovery of scrap generated by notching but also minimizes problems in the notching process caused by the scrap.

### [Description of Drawings]

FIG. 1 is a view showing conventional removal of debris during laser notching.
FIG. 2 is a perspective view showing the state in which a debris capture apparatus according to a preferred embodiment of the present invention is mounted in the vicinity of a rotary drum.
FIG. 3 is a perspective view of the debris capture apparatus shown in FIG. 2 when viewed in one direction.
FIG. 4 is a perspective view of the debris capture apparatus shown in FIG. 3 when viewed in the other direction.
FIG. 5 is a perspective view of the debris capture apparatus shown in FIG. 3 when viewed from below.
FIG. 6 is a perspective view of the debris capture apparatus of FIG. 3 when viewed from above.
FIG. 7 is a sectional view of the debris capture apparatus shown in FIG. 3 taken in direction A-A.
FIG. 8 is an exploded perspective view of the debris capture apparatus shown in FIG. 3.
FIG. 9 is a perspective view of a first blowing unit of the debris capture apparatus shown in FIG. 3 when viewed from below.
FIG. 10 is a perspective view of a second blowing unit of the debris capture apparatus shown in FIG. 3 when viewed from above.
FIG. 11 is a perspective view of the second blowing unit shown in FIG. 10 when viewed from below.
FIG. 12 is an exploded perspective view of the second blowing unit shown in FIG. 10.
FIG. 13 is a sectional view of the second blowing unit shown in FIG. 10 taken in direction B-B.
FIG. 14 is a perspective view of a scrap guide unit in the debris capture apparatus shown in FIG. 3.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, an X-axis direction shown in the drawings is defined as a width direction, a Y-axis direction as a height direction, and a Z-axis direction as a longitudinal direction.

Furthermore, a front direction means a direction close to a rotary drum to which an electrode is supplied, and a rear direction means a direction far from the rotary drum.

Hereinafter, an apparatus for capturing debris generated during laser notching according to the present invention and a debris capture method using the same will be described with reference to the accompanying drawings.

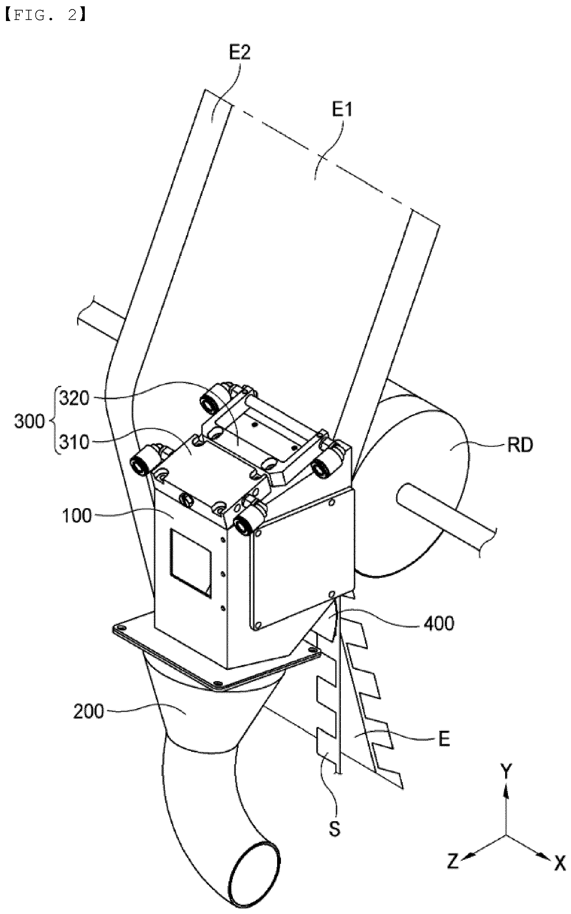

FIG. 2 is a perspective view showing the state in which a debris capture apparatus according to a preferred embodiment of the present invention is mounted in the vicinity of a rotary drum. As shown in FIG. 2, the debris capture apparatus according to the present invention is an apparatus for capturing debris generated when notching an edge of an electrode E, and is located in the vicinity of a cylindrical rotary drum RD to which the electrode E is supplied.

Specifically, the electrode E may be classified as a positive electrode and a negative electrode, and each of the positive electrode and the negative electrode includes a coated portion E1, to which an active material is applied, and a non-coated portion E1 to which no active material is applied. A laser beam is radiated toward the non-coated portion E1, which is located at an edge of the electrode, to form a tab having a certain shape. Of course, scrap S, which is a part cut off to form the tab, must be separated from the electrode E.

Meanwhile, the negative electrode sheet is manufactured by applying a slurry mixture of a negative electrode active material and a binder to a negative electrode current capture unit made of copper. As the negative electrode active material, for example, there may be used carbon, such as non-graphitizing carbon or graphite-based carbon; a metal composite oxide, such as LiₓFe₂O₃ (0≤x≤1), LiₓWO₂ (0≤x≤1), SnₓMe₁₋ₓMe'_{y}O_{z} (Me: Mn, Fe, Pb, Ge; Me': Al, B, P, Si, Group 1, 2, and 3 elements of the periodic table, halogen; 0<x≤1; 1≤y≤3; 1≤z≤8); lithium metal; a lithium alloy; a silicon-based alloy; a tin-based alloy; a metal oxide, such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅; a conductive polymer, such as polyacetylene; a Li-Co-Ni-based material; or a Si-based material, such as Si, SiO, SiO₂, or a mixture thereof; however, the present invention is not limited thereto.

The positive electrode sheet is manufactured by applying a slurry mixture of a positive electrode active material and a binder to a positive electrode current capture unit made of aluminum. The positive electrode active material may be constituted, for example, by a layered compound, such as a lithium cobalt oxide (LiCoO₂) or a lithium nickel oxide (LiNiO₂), or a compound substituted with one or more transition metals; a lithium manganese oxide represented by the chemical formula Li₁₊ₓMn₂₋ₓO₄ (where x = 0 to 0.33) or a lithium manganese oxide, such as LiMnO₃, LiMn₂O₃, or LiMnO₂; a lithium copper oxide (Li₂CuO₂); a vanadium oxide, such as LiV₃O₈, LiFe₃O₄ , V₂O₅, or Cu₂V₂O₇; a Ni-sited lithium nickel oxide represented by the chemical formula LiNi₁₋ₓMₓO₂ (where M = Co, Mn, Al, Cu, Fe, Mg, B, or Ga, and x = 0.01 to 0.3); a lithium manganese composite oxide represented by the chemical formula LiMn₂₋ₓMₓO₂ (where M = Co, Ni, Fe, Cr, Zn, or Ta, and x = 0.01 to 0.1) or the chemical formula Li₂Mn₃MO₈ (where M = Fe, Co, Ni, Cu, or Zn); LiMn₂O₄ in which a part of Li in the chemical formula is replaced by alkaline earth metal ions; a disulfide compound; or Fe₂(MoO₄)₃; however, the present invention is not limited thereto.

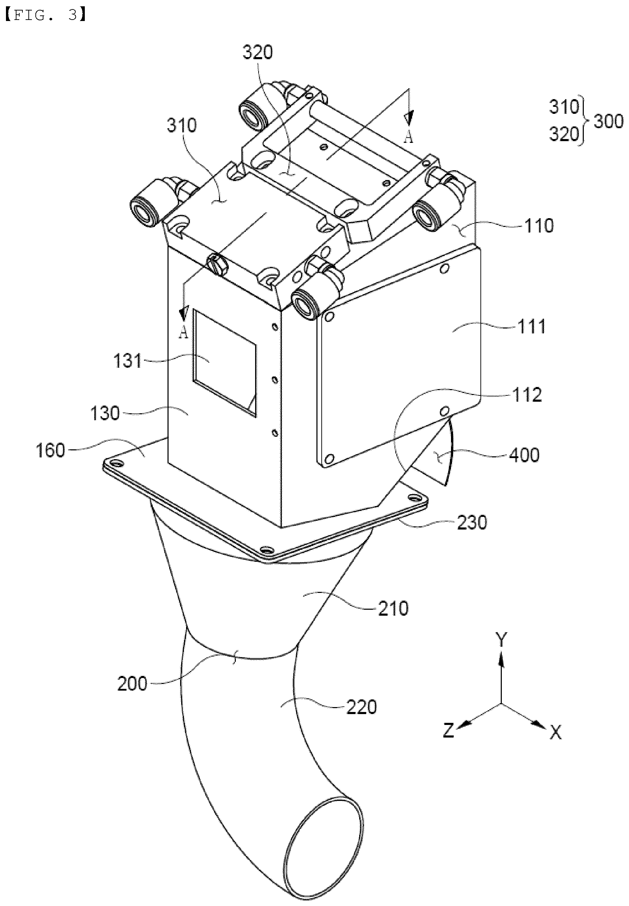

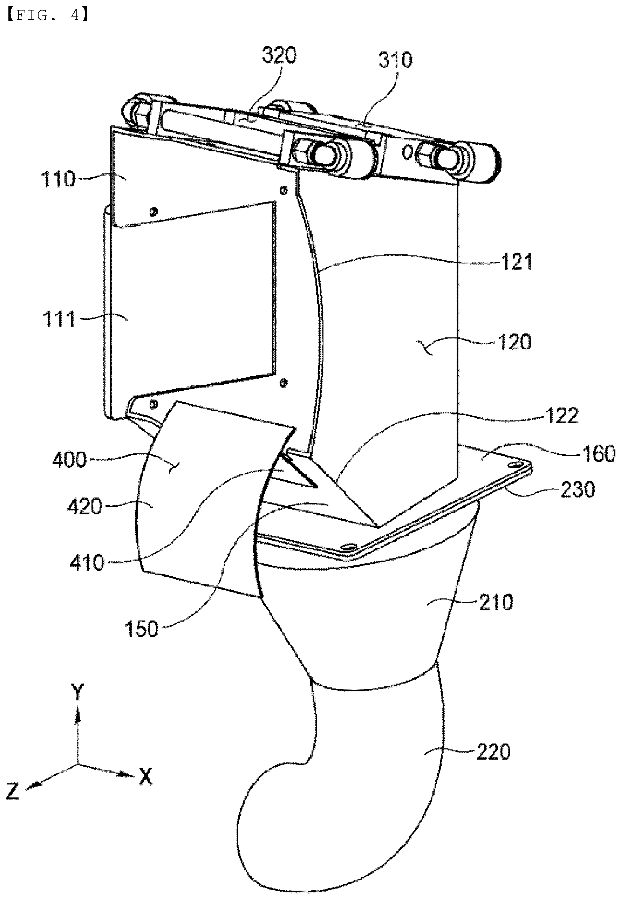

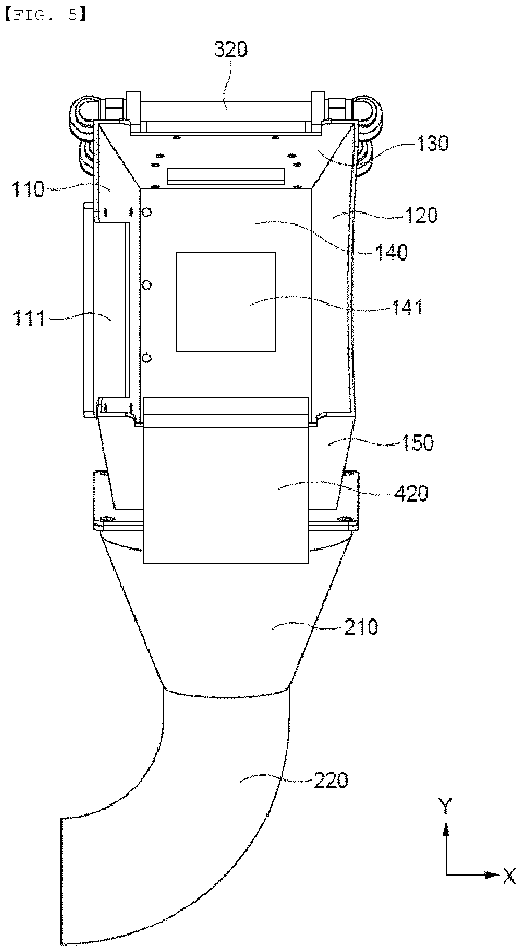

FIG. 3 is a perspective view of the debris capture apparatus shown in FIG. 2 when viewed in one direction, FIG. 4 is a perspective view of the debris capture apparatus shown in FIG. 3 when viewed in the other direction, and FIG. 5 is a perspective view of the debris capture apparatus shown in FIG. 3 when viewed from below.

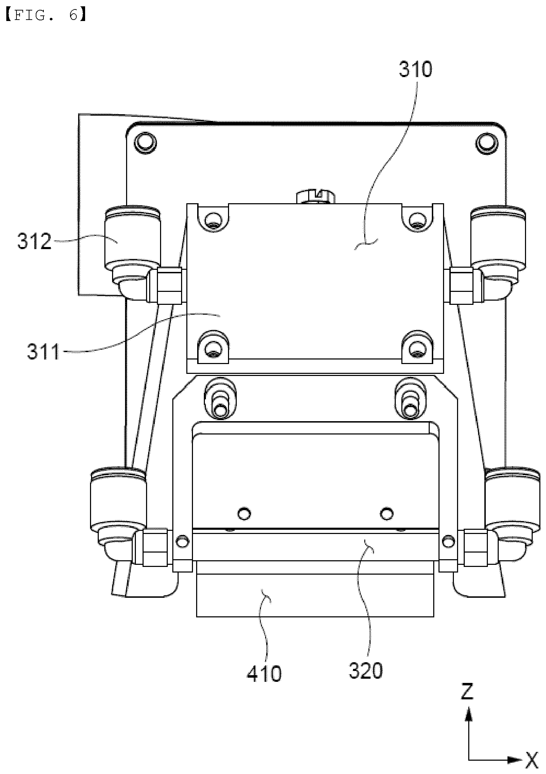

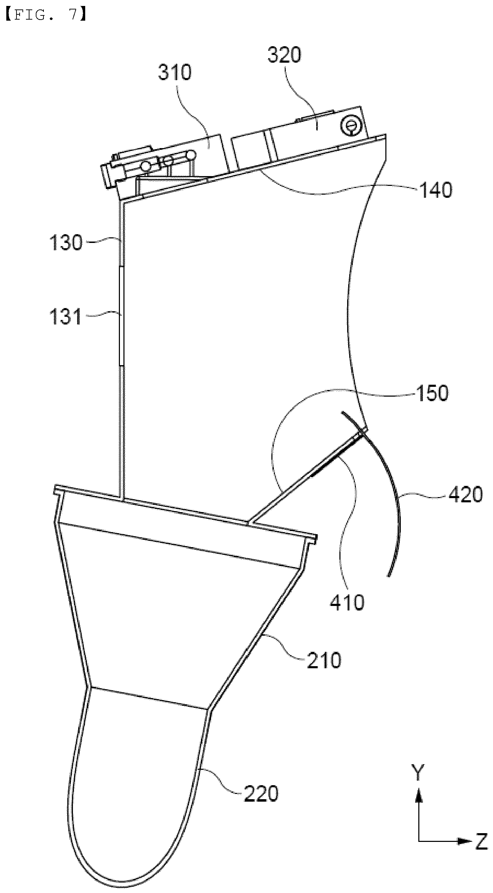

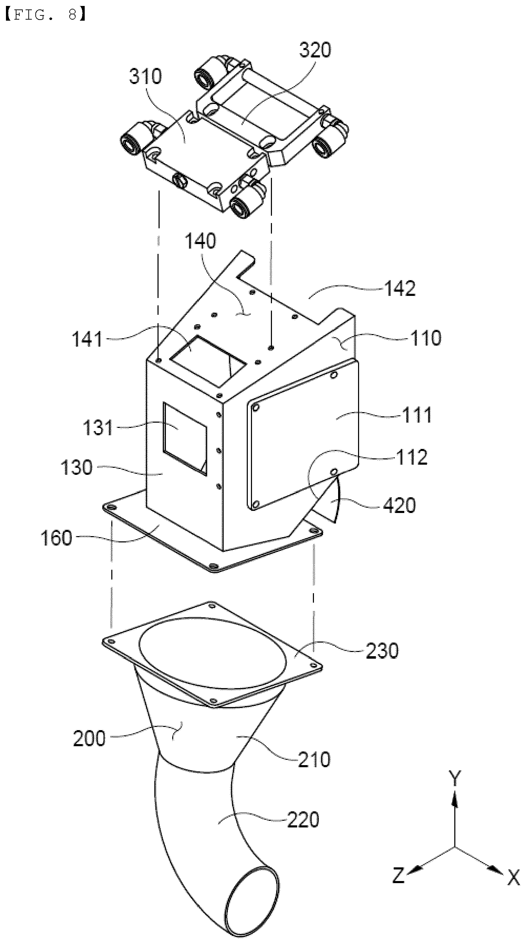

In addition, FIG. 6 is a perspective view of the debris capture apparatus of FIG. 3 when viewed from above, FIG. 7 is a sectional view of the debris capture apparatus shown in FIG. 3 taken in direction A-A, and FIG. 8 is an exploded perspective view of the debris capture apparatus shown in FIG. 3.

Referring to FIGs. 2 to 8, the debris capture apparatus according to the present invention includes a debris capture unit 100, a debris transfer unit 200, a blowing unit 300, and a scrap guide unit 400.

First, the debris capture unit 100 disposed so as to face a notched portion of the electrode E, which is continuously supplied so as to be brought into tight contact with an outer surface of the cylindrical rotary drum RD, and is open on one surface thereof such that debris generated during notching using a laser beam can be captured.

More specifically, the capture unit 100 has a plurality of surfaces connected to each other to form a space portion therein. A first surface 110 and a second surface 120 are located perpendicular to the ground and are spaced apart from each other by a predetermined distance, a third surface 130 is provided along one vertically oriented side edge of each of the first surface 110 and the second surface 120, and a fourth surface 140 is provided along an upper edge of each of the first surface 110 and the second surface 120.

The first surface 110 is preferably provided with a first sight window 111 such that the process of notching the electrode E using the laser beam can be visually checked, and the third surface 130 is provided with a second sight window 131 such that a laser beam radiated by a laser radiator (not shown) can reach the non-coated portion E2 of the electrode E via the debris capture unit 100.

Here, the second sight window 131 is not particularly restricted as long as a laser beam can pass through the second sight window. In an example, the second sight window may be glass or quartz.

The fourth surface 140 is provided with a first through-hole 141 and a second incision portion 142, which is located in front of the first through-hole 141, such that air supplied by the blowing unit 300 is guided downward and, more specifically, toward the debris transfer unit 200, which will be described in more detail later.

Meanwhile, it is preferable for the distance between the first surface 110 and the second surface 120 to be gradually increased as the first surface and the second surface approach in the front direction, that is, in the direction toward the rotary drum RD, and the upper edges of the first surface 110 and the second surface 120 are more preferably inclined relative to the ground such that the fourth surface 140 faces upward as the first surface and the second surface approach in the front direction.

When the first surface 110, the second surface 120, and the fourth surface 140 are configured as described above, it is possible to sufficiently cover the part on which notching is performed, thereby increasing the capture ability of debris.

Particularly, it is preferable for a part of the other vertically oriented side edge of the second surface 120 facing the rotary drum RD to be provided with a first incision portion 121 incised in an arc shape and for the other vertically oriented side edge of the first surface 110 to be in a vertical state without any incised part.

The non-coated portion E2 of the electrode E is located at the edge of the electrode current capture unit, and the non-coated portion E2 is typically provided so as to be brought into tight contact with the outer surface of the edge of the rotary drum RD during the notching process.

Therefore, a first incision portion 121 having a curvature similar to the curvature of the rotary drum RD is formed in the other vertically oriented side edge of the second surface 120, whereby it is possible to locate the second surface 120 close to the electrode E, and furthermore, the first surface 110 may cover a part of the side surface of the rotary drum RD, whereby debris capture efficiency is improved (see FIG. 2).

Of course, referring to FIG. 2, since the case in which the non-coated portion E2 is located on the right side of the rotary drum RD when viewed from the left is described by way of example, it is obvious that the incision portion must be formed in the first surface 110 when the non-coated portion E2 is located on the left side of the rotary drum RD.

Lower parts of the other vertically oriented side edges of the first surface 110 and the second surface 120 facing the rotary drum RD are provided respectively with a first inclined portion 112 and a second inclined portion 122, each of which is inclined at a predetermined angle downward toward the rear to facilitate movement of the captured debris to the debris transfer unit 200, and the first inclined portion 112 and the second inclined portion 122 are connected to each other via a fifth surface 150.

A first flange 160 removably coupled to the debris transfer unit 200 is located along the lower edges of the first surface 110, the second surface 120, the third surface 130, and the fifth face 150.

Next, the debris transfer unit 200, which is located under the debris capture unit 100 to transfer the captured debris, will be described.

The debris transfer unit 200 includes a first transfer pipe 210, a second transfer pipe 220 located under the first transfer pipe 210, and a second flange 230.

The first transfer pipe 210, which is connected to the debris capture unit 100 so as to communicate therewith, preferably has a conical shape with an inner diameter or sectional area that gradually decreases downward to facilitate transfer of the captured debris.

The second transfer pipe 220 is connected to a container (not shown) configured to collect the captured debris, and is preferably connected to a known suction means (not shown), such as a vacuum pump, such that the interior of the debris capture unit 100 is under negative pressure, although not shown in the drawings.

The second flange 230, which is provided along an upper edge of the first transfer pipe 210, is fastened to the first flange 160 of the debris capture unit 100.

The blowing unit 300 is located above the debris capture unit 100 to blow air downward, and includes a first blowing unit 310 and a second blowing unit 320.

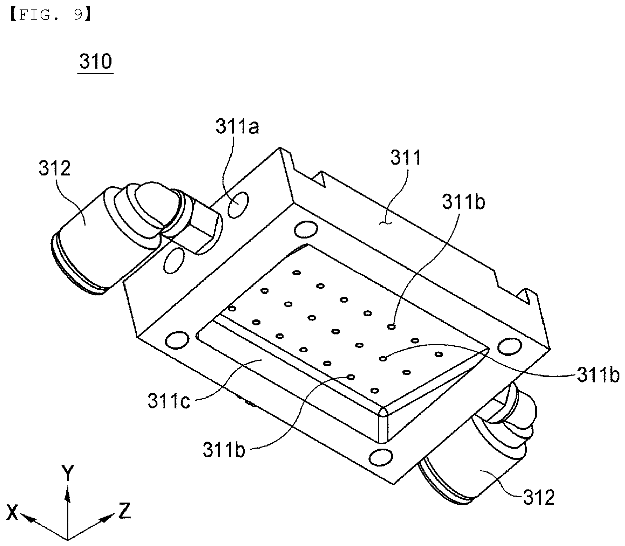

FIG. 9 is a perspective view of the first blowing unit of the debris capture apparatus shown in FIG. 3 when viewed from below. The first blowing unit will be described in detail with reference to FIGs. 3, 7, 8, and 9.

The first blowing unit 310 includes a first blowing unit body 311 configured to receive and blow air and a first air supply member 312 configured to supply external air to the first blowing unit body 311.

Specifically, the first blowing unit body 311 has a roughly hexagonal block shape and is provided on both sides in the longitudinal direction (Z-axis) with one or more first air inlets 311a. In addition, a plurality of first air outlets 311b is formed in a lower surface of the first blowing unit body, i.e., the surface of the first blowing unit body facing the through-hole 141 provided in the fourth surface 140 of the debris capture unit 100. Of course, it is obvious that the first air inlets 311a and the first air outlets 311b communicate with each other.

The first air supply member 312 is mounted in each first air inlet 311a and is connected to a known air supply means (not shown), such as a compressor, to supply air to the first blowing unit body 311.

Meanwhile, the lower surface of the first blowing unit 310, in which the first air outlets 311b are located, is preferably provided with a depression 311c that gradually increases in depth toward the rear. This is because the fourth surface 140 is inclined upward toward the front, which is advantageous for guiding the air blown through the first air outlets 311b toward the first transfer pipe 210.

Although FIG. 9 shows only a pair of first air supply members 312, it is obvious that the first air supply member is mounted in each of the first air inlets 311a and that either a pair of first air inlets 311a or only a single first air inlet 311a may be provided as long as a sufficient amount of air can be blown through the first air outlets 311b.

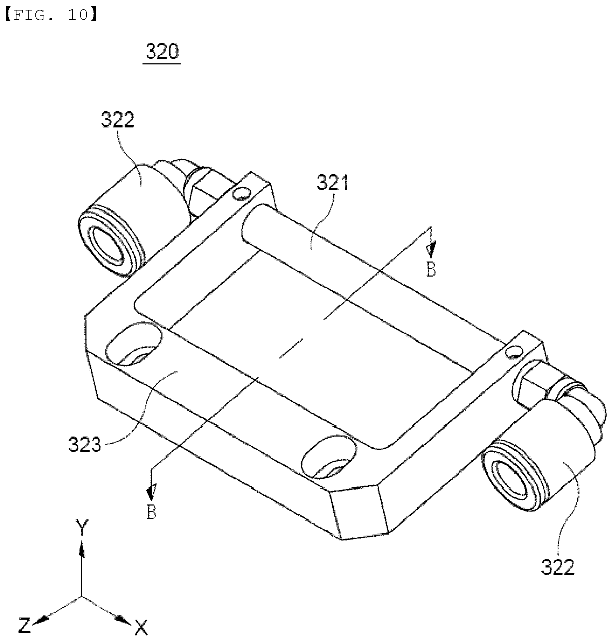

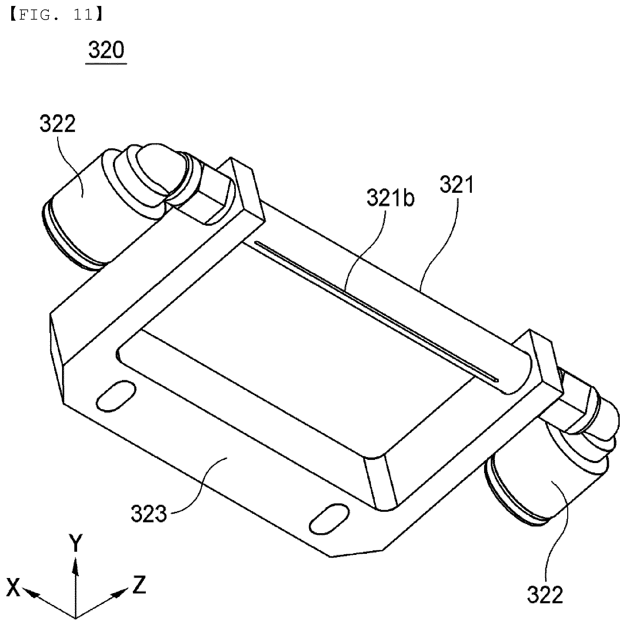

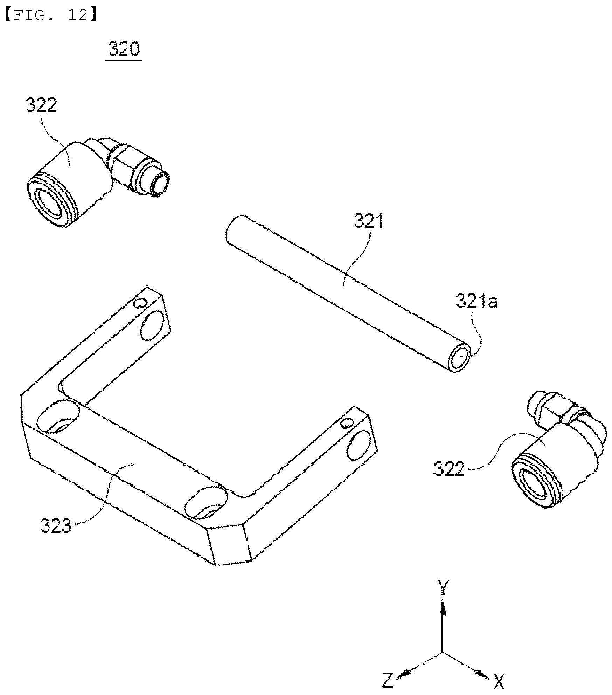

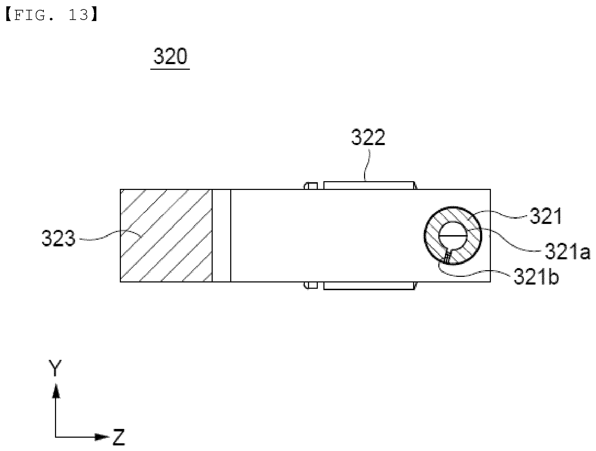

FIG. 10 is a perspective view of a second blowing unit of the debris capture apparatus shown in FIG. 3 when viewed from above, FIG. 11 is a perspective view of the second blowing unit shown in FIG. 10 when viewed from below, FIG. 12 is an exploded perspective view of the second blowing unit shown in FIG. 10, and FIG. 13 is a sectional view of the second blowing unit shown in FIG. 10 taken in direction B-B.

The second blowing unit will be described in detail with reference to FIGs. 3 and 7 to 13.

The second blowing unit 320 includes a second blowing unit body 321 configured to receive and blow air, a second air supply member 322 configured to supply external air to the second blowing unit body 321, and a support portion 323 configured to fasten the second blowing unit body 321 to the fourth surface 140 of the capture unit 100.

Specifically, the second blowing unit body 321 is formed in the shape of a hollow cylinder or a hollow polygonal column, is provided at one or both sides thereof with a second air inlet 321a fastened to the second air supply member 322, and is provided with a slit-shaped second air outlet 321b in the width direction (X-axis).

Meanwhile, the second blowing unit body 321 is located on the second incision portion 142 of the fourth surface 140 corresponding to the upper surface of the debris capture unit 100, and the fourth surface 140 is inclined upward. Thus, the second incision portion 142 is preferably inclined such that the air blown through the second air outlet 321b is directed in a straight downward direction (see FIG. 13).

The support portion 323 is shown as having a bent shape at both ends in order to grip the second blowing unit body 321, but the shape of the support member may be changed as long as the second blowing unit body 321 can be fixed to the fourth surface 140.

The second blowing unit 320 having the above-described configuration may serve as a kind of air curtain, thereby preventing the escape of debris introduced into the debris capture unit 100 and further preventing scrap S from being introduced into the debris capture unit 100.

Of course, it is obvious that the pressure of air blown from the first air outlet 311b, which is located at the rear, must be greater than the pressure of air blown through the second air outlet 321b such that the generated debris can be introduced into the debris capture unit.

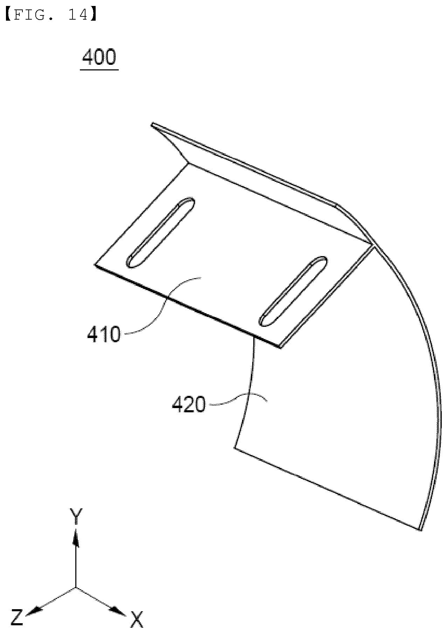

FIG. 14 is a perspective view of a scrap guide unit in the debris capture apparatus shown in FIG. 3. The scrap guide unit will be described with reference to FIGs. 4, 7, and 14.

The scrap guide unit 400 is configured to guide scrap S generated by notching to the outer downward side of the debris capture unit 100, and includes a fixture 410 connected to the fifth surface 150 and a guide plate 420 connected to the fixture 410. Specifically, the fixture 410 is fixed to an upper surface or a lower surface of the fifth surface 150, and the guide plate 420 is formed in the shape of a plate having a predetermined curvature so as to be bent in a direction opposite to the outer surface of the rotary drum.

Therefore, the scrap S generated by notching moves downward along the guide plate 420, which not only facilitates recovery of the scrap S but also prevents problems in the notching process caused by the scrap S.

In particular, when a part of the top of the guide plate 420 is located in the debris capture unit 100, as shown in FIG. 7, the guide plate may function as a blocking plate, which may prevent the escape of debris introduced into the debris capture unit 100.

Next, a method of capturing debris using the debris capture apparatus will be described.

The debris capture method according to the present invention includes a first step of locating the debris capture apparatus at a position spaced apart from a cylindrical rotary drum RD by a predetermined distance and a second step of radiating a laser beam to notch an edge of an electrode E.

In the first step, the second surface 120 of the debris capture unit 100 is located close to the rotary drum RD, and the first surface 110 is disposed so as to cover a part of a side surface of the rotary drum RD.

Meanwhile, an electrode E to be notched is supplied so as to be brought into tight contact with an outer surface of the cylindrical rotary drum RD, and a step of supplying the electrode E may be performed before or after the step of locating the debris capture apparatus in the vicinity of the cylindrical rotary drum RD.

In addition, a step of supplying air to the blowing unit, more specifically the first blowing unit and the second blowing unit, is preferably performed before notching.

In addition, a step of suctioning air such that the interior of the debris transfer unit is under negative pressure may be further performed, as needed.

Those skilled in the art to which the present invention pertains will appreciate that various applications and modifications are possible within the category of the present invention based on the above description.

### (Description of Reference Symbols)

100: Debris capture unit
110: First surface
111: First sight window 112: First inclined portion
120: Second surface
121: First incision portion 122: Second inclined portion
130: Third surface
131: Second sight window
140: Fourth surface
141: Through-hole 142: Second incision portion
150: Fifth surface
160: First flange
200: Debris transfer unit
210: First transfer pipe 220: Second transfer pipe
230: Second flange
300: Blowing unit
310: First blowing unit
311: First blowing unit body
311a: First air inlet 311b: First air outlet
311c: Depression
312: First air supply member
320: Second blowing unit
321: Second blowing unit body
321a: Second air inlet 321b: Second air outlet
322: Second air supply member
323: Support portion
400: Scrap guide unit
410: Fixture
420: Guide plate
E: Electrode
E1: Coated portion E2: Non-coated portion
RD: Rotary drum
S: Scrap

## Claims

1. An apparatus configured for capturing debris generated when a laser beam is radiated to an electrode supplied to a cylindrical rotary drum so as to be brought into tight contact with an outer surface of the cylindrical rotary drum to notch an edge of the electrode, the apparatus comprising:
a debris capture unit having an open surface located so as to face a notched portion of the electrode, the debris capture unit being configured to capture debris;
a debris transfer unit located under the debris capture unit, the debris transfer unit being configured to transfer the captured debris;
a blowing unit located above the debris capture unit, the blowing unit being configured to blow air downward; and
a scrap guide unit configured to guide scrap, generated by notching, downward and outside of the debris capture unit.

2. The apparatus according to claim 1, wherein the debris capture unit comprises:
a first surface and a second surface vertically arranged and spaced apart from each other by a predetermined distance;
a third surface located along a vertically oriented side edge of each of the first surface and the second surface; and
a fourth surface located along an upper edge of each of the first surface and the second surface, and
the third surface is provided with a second sight window, through which the laser beam passes, and the fourth surface is provided with a first through-hole and a second incision portion configured to guide the air downward.

3. The apparatus according to claim 2, wherein the fourth surface is inclined upward in a direction toward a front.

4. The apparatus according to claim 3, wherein lower parts of other vertically oriented side edges of the first surface and the second surface are provided respectively with a first inclined portion and a second inclined portion, each of which is inclined at a predetermined angle downward in a direction toward a rear, and a fifth surface configured to connect the first inclined portion and the second inclined portion to each other is further provided.

5. The apparatus according to claim 2, wherein the blowing unit comprises a first blowing unit located in the first through-hole and a second blowing unit located in the second incision portion.

6. The apparatus according to claim 5, wherein the first blowing unit comprises a block-shaped first blowing unit body having a first air inlet provided in a side surface thereof and a first air outlet provided in a lower surface thereof and a first air supply member mounted in the first air inlet.

7. The apparatus according to claim 6, wherein the lower surface of the first blowing unit has a depression having a depth gradually increasing in a direction toward a rear.

8. The apparatus according to claim 5, wherein the second blowing unit comprises a cylindrical or polygonal column-shaped second blowing unit body having a second air inlet provided in a side surface thereof and a slit-shaped second air outlet provided in a lower surface thereof and a second air supply member mounted in the second air inlet.

9. The apparatus according to claim 1, wherein the debris transfer unit comprises a first transfer pipe connected to the debris capture unit and a second transfer pipe located under the first transfer pipe, the first transfer pipe having a conical shape with a sectional area gradually decreasing in a downward direction.

10. The apparatus according to claim 2, wherein the other vertically oriented side edge of the second surface has a first incision portion incised in an arc shape.

11. The apparatus according to claim 2, wherein a distance between the first surface and the second surface is gradually increased toward in a direction toward a front.

12. The apparatus according to claim 4, wherein the scrap guide unit comprises a fixture abutting the fifth surface and a guide plate connected to the fixture, the guide plate having a predetermined curvature.

13. The apparatus according to claim 12, wherein a part of an upper part of the guide plate is located in the debris capture unit and a remaining part of the upper part of the guide plate is located outside the debris capture unit while extending downward by a predetermined length.

14. A method of capturing debris using the apparatus according to claim 1, the method comprising:
a first step of locating the debris capture apparatus at a position spaced apart from a cylindrical rotary drum by a predetermined distance; and
a second step of radiating the laser beam to notch an edge of an electrode, wherein
a step of supplying air to the blowing unit is performed before the second step.
